**Europäisches Patentamt**

**European Patent Office**

**Office européen des brevets**

(19)

(11) Veröffentlichungsnummer: **0 140 146**
**A2**

(12) # EUROPÄISCHE PATENTANMELDUNG

(21) Anmeldenummer: **84111296.4**

(51) Int. Cl.⁴: **C 12 C 1/18**

(22) Anmeldetag: **21.09.84**

(30) Priorität: **22.09.83 DE 3334302**

(43) Veröffentlichungstag der Anmeldung:
**08.05.85 Patentblatt 85/19**

(84) Benannte Vertragsstaaten:
**BE DE FR GB IT NL**

(71) Anmelder: **Krüger, Eckhard, Prof. Dr.**
**Remstalerstrasse 38a**
**D-1000 Berlin 28(DE)**

(71) Anmelder: **Meuser, Friedrich, Prof. Dr.-Ing.**
**Am Eichenhain 52**
**D-1000 Berlin 28(DE)**

(72) Erfinder:
**Der Erfinder hat auf seine Nennung verzichtet**

(74) Vertreter: **Lorenz, Eduard**
**Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier Widenmayerstrasse 23 D-8000 München 22(DE)**

(54) **Aus einer Mischung bestehendes Malzprodukt.**

(57) Die Erfindung bezieht sich auf ein Malzprodukt, bestehend aus der Mischung eines Extrudates von in üblicher Weise geweichtem und gekeimtem Getreide, das nach der Keimung unzerkleinert bei Temperaturen bis 90°C unter ausreichender Luftzufuhr auf 12 bis 25 % Wassergehalt getrocknet und nach der Schrotung bei Temperaturen von 100 bis 220°C mit mechanischen Energieaufwendungen von 25 bis 200Wh × kg⁻¹ extrudiert wurde, und Malz. Zwecks Herstellung eines Malzproduktes, das im Vergleich zum normalen Malz sich mit weniger Energie herstellen läßt, ohne daß es zu Qualitätseinbußen kommt, enthält die Mischung neben dem Extrudatanteil bis zu 95 % Schwelkmalz.

EP 0 140 146 A2

EDUARD LORENZ · BERNHARD SEIDLER · MARGRIT SEIDLER
DIPL.-ING. HANS K. GOSSEL · DR. INA PHILIPPS **0140146**
RECHTSANWÄLTE

*

Ihr Zeichen
Unser Zeichen
Tag

## B e s c h r e i b u n g

Die Erfindung bezieht sich auf ein Malzprodukt nach dem Oberbegriff des Patentanspruchs 1.

Die herkömmliche Vermälzung von Braugerste zu Braumalz erfolgt in erster Linie mit der Zielsetzung, ein komplettes Enzymsystem durch die Keimung zu aktivieren und zu synthetisieren und durch den enzymatischen Abbau von Zellwänden im Korn eine gewisse Porosität zu erreichen, die mit dem Fachbegriff "cytolytische Lösung" umschrieben wird und die Verfügbarmachung der Malzinhaltsstoffe positiv beeinflußt. Ferner hat die Mälzung das Ziel, malztypische Farb- und Aromastoffe zu bilden.

Die Vermälzung verläuft in der Reihenfolge:
Weichen, Keimen, Trocknen, Darren.
Hierbei wird Gerste zuerst mit Wasser auf einen Wassergehalt von ungefähr 45 % geweicht (60 Stunden). Anschließend wird das Korn über 7 Tage gekeimt. Der Keimung folgt eine Trocknung (Schwelken) bei Temperaturen von ca. 50°C bis auf einen Wassergehalt von 10 %. Die Bildung der Farb- und Aromastoffe geschieht dann beim Darren mit Temperaturen von 80°C und mehr während ca. 6 Stunden; der Wassergehalt wird dabei auf 3 bis 4 % eingestellt. Der Energieverbrauch für diesen verfahrenstechnischen Prozeß ist nicht unerheblich und verteilt sich wie folgt:

Weichen und Keimen: 0,124 GJ/t Malz (10 % $H_2O$)
Trocknen:            0,284 GJ/t Malz (60 % $H_2O$)
Darren:              0,642 GJ/t Malz (30 % $H_2O$)

8 München 22, Widenmayerstrasse 23          Telex: 5 24 109 Lawp d          Postscheck: München 1702 80-804
Telefon (089) 22 06 74-78                    Telegrammanschrift: Lawpat München          Bankkonto: Bayerische Vereinsbank
                                                                                         München, Konto 862019

EDUARD LORENZ · BERNHARD SEIDLER · MARGRIT SEIDLER
DIPL.-ING. HANS K. GOSSEL · DR. INA PHILIPPS **0140146**
RECHTSANWÄLTE

2

Ihr Zeichen
Unser Zeichen
Tag

Die Mälzungsarbeit mit der Zielsetzung, ein Qualitätsmalz zu erhalten, ist also von dem verfahrenstechnischen Zwang geprägt, das getrocknete Malz (Schwelkmalz), und zwar das gesamte Malz, über eine bestimmte Zeit thermisch so zu behandeln, daß die typischen Malzaromastoffe und Farbstoffe entstehen. Dieser zeitlich abhängige Vorgang ist abgeschlossen, wenn der Wassergehalt auf 3 bis 4 % durch das Darren abgesenkt worden ist.

Der Erfindung liegt nun die Aufgabe zugrunde, ein Malzprodukt herzustellen, das im Vergleich zum normalen Malz sich mit weniger Energie herstellen läßt, ohne daß es zu Qualitätseinbußen kommt.

Diese Aufgabe wird erfindungsgemäß gelöst durch die in dem Kennzeichnungsteil des Anspruchs 1 angegebenen Merkmale. Basisbestandteil des neuen Malzproduktes ist das Schwelkmalz, das bei der herkömmlichen Malzbereitung als Zwischenprodukt anzusehen ist und aus dem Grünmalz (gekeimte Gerste mit ca. 45 % Wasser) durch Trocknen auf 10 % $H_2O$ hergestellt wird. Der Energieaufwand zur Bereitung eines solchen Zwischenproduktes beträgt ca. 70 % des gesamten Energieaufwandes. Wird die Trocknung (das Schwelken) nur bis zu einem Wassergehalt von ca. 15 % betrieben, dann vermindert sich der anteilige Energieaufwand auf ca. nur 50 %. Ein solches Schwelkmalz soll erfindungsgemäß als Basisbestandteil des neuartigen Malzproduktes und zugleich auch als Ausgangsprodukt für die Extrusion dienen. Die Hochtemperatur-Extrusionskochung dieses Produktes wird betrieben, um die Malzfarb- und -Aromastoffe zu bilden und zugleich den enzymatischen Stärkeaufschluß bei der Würzebereitung durch eine Plastifizierung der Stärke zu begünstigen. Bei dieser Behandlung werden sämtliche Enzyme des Schwelkmalzes inaktiviert.

8 München 22, Widenmayerstrasse 23    Telex: 5 24 109 Lawp d         Postscheck: München 1702 80-804
Telefon (089) 22 06 74-78             Telegrammanschrift: Lawpat München   Bankkonto: Bayerische Vereinsbank
                                                                         München, Konto 862 019

*3*
- -

Dies ist jedoch kein technologischer Nachteil; denn durch die erfindungsgemäße Zumischung von Schwelkmalz wird dieser Verlust mehr als ausgeglichen. Da Schwelkmalz nicht einer Darrung unterworfen war, erfolgt auch keine teilweise thermische Inaktivierung seiner Enzyme. Bekanntlich erleidet Malz für die Gesamtheit seiner Enzyme durch das Darren eine rund 20- bis 30%ige Schädigung. Einige Enzyme, wie z.B. die Katalase, werden sogar vollständig inaktiviert. Durch die Verwendung der erfindungsgemäßen neuartigen Malzmischung können diese Enzyme erstmals für die Würzebereitung genutzt werden, was sich auf den Geschmack und auf die Haltbarkeit des Bieres positiv auswirkt. Die Verfügbarkeit des kompletten Enzymsystems des Schwelkmalzes hat z.B. für die Herstellung von Diätbieren noch eine besondere Bedeutung. Der Kohlenhydratabbau ist für diese Bierart so weit zu treiben, daß im fertigen Bier nicht mehr als 0,75 g belastende Kohlenhydrate in 100 ml Getränk enthalten sind. Nun ist bekannt, daß der Stärkeabbau durch Enzyme bewirkt wird, die $\alpha$-1,4- und $\alpha$-1,6-Bindungen spalten können. In der bisherigen Praxis wird die Stärke fast ausschließlich durch die $\alpha$-1,4-Bindungen spaltenden Enzyme zu Maltose und Dextrinen abgebaut. Dies bewerkstelligen die $\alpha$- und $\beta$-Amylasen des Malzes. Die $\alpha$-1,6-Bindungen spaltenden Enzyme wie Grenzdextrinasen und das R-Enzym sind temperaturempfindlich und werden beim Darren weitgehend inaktiviert. Eine praktische technologische Nutzung dieser Enzyme ist daher dahezu nicht möglich. Die Praxis der Diätbier-Bereitung sieht daher die Verwendung von Malzauszügen während der Gärung vor, um den unvollständigen Stärkeabbau bei der Würzebereitung auszugleichen. Die Verwendung von Malzauszügen bedeutet jedoch stets ein biologisches Risiko. Durch die Verwendung der erfindungsgemäßen neuartigen Malzmi-

# EDUARD LORENZ · BERNHARD SEIDLER · MARGRIT SEIDLER
## DIPL.-ING. HANS K. GOSSEL · DR. INA PHILIPPS
### RECHTSANWÄLTE

**0140146**

- 4 -

Ihr Zeichen
Unser Zeichen
Tag

schung ist die Nutzung der $\alpha$-1,6-Bindungen spaltenden Enzyme möglich, wodurch der erforderliche Kohlenhydratabbau zur Bereitung von Diätbier im Sudhaus erfolgen kann. Die Verwendung von Malzauszügen ist nicht mehr erforderlich. Will man dem Diätbier eine bestimmte Malzaromastärke vermitteln, ist es besonders vorteilhaft, nach Anspruch 5 zu arbeiten, bei dem eine intensive Aromabildung angestrebt wird. In gleicher Weise können flavorarme Biere wie alkoholfreie, alkoholarme Biere oder solche Biere, die aufgrund ihres geringeren Extraktgehaltes wie Einfach- und Schankbiere (Leichtbiere) wenig Aroma- und Geschmacksstoffe aufweisen, im Flavor verstärkt werden. Eine besondere Verfahrensvariante ist die zusätzliche Verwendung von Extrudat ohne Vermischung mit Schwelkmalz. Das gleiche gilt auch, wenn mit herkömmlichem Darrmalz diese Biergruppe bereitet und das flavorstarke neue Malzprodukt (Anspruch 5) oder das Extrudat alleine zur Verstärkung des Flavors verwendet werden.

Besondere Bedeutung hat die erfindungsgemäße Verwendung des neuartigen Malzprodukts bei der Verarbeitung von unvermalztem Getreide (Rohfrucht). Die Verwendung von technischen Enzymen kann überflüssig werden, wenn der Rohfruchtanteil 30 bis 50 % nicht übersteigt, und insbesondere nach Anspruch 6 das neuartige Malzprodukt hergestellt wird. Sofern unter Mitverwendung von technischen Enzymen gearbeitet wird, kann die Zumischung des aromastarken Extrudates zum Beispiel nach den Ansprüchen 5 und 11 ohne Beimischung mit dem Schwelkmalz hergestellt, eine Flavorverstärkung bewirken. Bei Mitverarbeitung von normalem Malz ist die Verwendung des neuen Malzproduktes oder des Extrudates alleine eine sinnvolle Verfahrensvariante.
Zur Herstellung von Whisky-Malz kann zweckmäßigerweise neben dem üblicherweise vewendeten Malz der Extrudatanteil bis zu 50 %

8 München 22, Widenmayerstrasse 23
Telefon (089) 22 06 74−78

Telex: 5 24 109 Lawp d
Telegrammanschrift: Lawpat München

Postscheck: München 1702 80-804
Bankkonto: Bayerische Vereinsbank
München Konto 8/8010

– 5 –

betragen.

Das erfindungsgemäße neuartige Malzprodukt ist ein lagerfähiges Material, während das Schwelkmalz mit 15 % Wassergehalt für sich nur eine begrenzte Lagerfähigkeit besitzt. Durch die Extrusion des Schwelkmalzes erhält man ein Produkt, das 7 bis 8 % Wassergehalt hat. Durch die Vemischung beider Produkte stellt sich ein Mischwassergehalt von ca. 10 bis 12 % ein; das erfindungsgemäße neuartige Malzprodukt ist somit lagerfähig.

Die Bildung der typischen Malzfarb- und -Aromastoffe erfolgt aus den Monosacchariden Glukose/Fruktose sowie den niedermolekularen proteinischen Verbindungen, z.B. Aminosäuren durch Maillard-Reaktionen. Diese Reaktion ist abhängig von der Konzentration der Ausgangsprodukte. Die Bildung dieser Verbindungen ist das Ergebnis einer intensiven Amylolyse und Proteolyse. Diese Vorgänge werden zur Herstellung des Teilproduktes des erfindungsgemäßen neuartigen Malzproduktes, dem Schwelkmalz, durch eine intensive Weicharbeit, vorzugsweise durch eine pneumatische Weiche, und auch eine ausgewählte Keimarbeit, vorzugsweise mit fallenden Temperaturen bewirkt. Eine diesbezüglich besonders voteilhafte Variante ist die Behandlung des Schwelkmalzes mit einem Wassergehalt von 10 bis 25 % dadurch, daß es vor der Extrusion während 10 bis 60 Minuten bei Temperaturen von 50 bis 80°C intensiven Lösungsvorgängen zugeführt wird.

Die Hochtemperaturextrusionskochung des Schwelkmalzes führt neben der Plastifizierung der Stärke auch zu Veränderungen anderer Inhaltsstoffe. So werden proteinische Verbindungen durch die verwendeten Temperaturen zum Teil denaturiert. Dieses

8 München 22, Widenmayerstrasse 23
Telefon (089) 22 06 74–78

Telex: 5 24 109 Lawp d
Telegrammanschrift: Lawpat München

Postscheck: München 1702 80-804
Bankkonto: Bayerische Vereinsbank
München, Konto 862 019

- *6* -

Defizit ist durch eine verstärkte Proteolyse während der Würzebereitung wieder auszugleichen. Das erfindungsgemäße neuartige
Malzprodukt enthält mit den Enzymen des Schwelkmalzes so ausreichend proteolytische Enzyme, daß dieser Nachteil voll ausgeglichen wird. Zudem ist das Schwelkmalz selbst reich an
löslichen proteinalen Verbindungen. Schon dadurch kann zum Teil
das proteinische Defizit ausgeglichen werden. Andere Verbindungen erfahren durch mechanische Einwirkungen während der Hochtemperatur-Extrusionskochung Veränderungen, ihr enzymatischer Abbau
während der Würzebereitung verlangt die Anwesenheit ausreichender Enzymmengen. Die Vermischung von Schwelkmalz zum erfindungsgemäßen neuartigen Produkt sichert die Existenz der erforderlichen und in der Menge benötigten Enzyme, um diese Bestandteile
des Extrudates in der Würze in Lösung zu bringen.

Die DE-OS 32 12 390 beschreibt ein Verfahren zur Herstellung
und Verarbeitung eines neuartigen Malzproduktes. Hierbei wird
vom getrockneten Grünmalz ausgegangen, das einer Hochtemperatur-
Extrusionskochung unterworfen wird. Es werden dabei die Stärke
plastifiziert und auch typische Malz- und Farbstoffe gebildet.
Dieses Produkt ist aufgrund seines Wassergehaltes lagerfähig
und ohne jegliche Enzyme. Die fehlenden Enzyme werden durch
Grünmalz, Darrmalz oder technische Enzyme bei der Würzebereitung
zugegeben. Es ist also für sich nicht verarbeitungsfähig und
bedarf der Beimischung enzymhaltigen Materials.

Das erfindungsgemäße neuartige Malzprodukt weist diese Nachteile nicht auf. Es besitzt einen hohen Enzymgehalt und benötigt
kein im Vergleich teureres normales Darrmalz oder nicht lagerfähiges Grünmalz. Es ist aufgrund seines Wassergehaltes lagerfähig und besitzt hinsichtlich der Menge und Zusammensetzung

- 7 -

der technologisch relvanten Inhaltsstoffe gegenüber normalem
Darrmalz sogar eine Reihe von Vorteilen, wie z.B. eine aromagünstigere Zusammensetzung flüchtiger Maillard-Produkte.

Beispiele:

Trocknung von Grünmalz mit 45 % auf Schwelkmalz mit 15 % Wasser.
Das Schwelkmalz wird von den Wurzelkeimen befreit und mit einer
geeigneten Mühle auf eine Partikelgröße von 1000 µm vermahlen.
Die Extrusion des Mahlgutes erfolgt in einer Continua 37 der
Firma Werner & Pfleiderer, Stuttgart.

| Extrusionsbedingungen: | Beispiele | |
|---|---|---|
| | 1 | 2 |
| spezifische mechanische Energie (Wh/kg) | 73 | 55 |
| Temperatur (°C) | 173 | 179 |

Die analytische Kontrolle erfolgte in der Weise, daß nach dem
üblichen Kongreßmaischverfahren das Schwelkmalz, die erfindungsgemäße neuartige Malzmischung und das aus dem Schwelkmalz herkömmlich hergestellte Darrmalz untersucht wurden.

EDUARD LORENZ · BERNHARD SEIDLER · MARGRIT SEIDLER
DIPL.-ING. HANS K. GOSSEL · DR. INA PHILIPPS **0140146**
RECHTSANWÄLTE

_ 8 _

Ihr Zeichen
Unser Zeichen
Tag

## Tabelle

|  | Darrmalz | Schwelkmalz | Beispiele *) | |
|---|---|---|---|---|
|  |  |  | 1 | 2 |
| Extrakt (%) | 81,9 | 83,6 | 81,8 | 81,8 |
| Viskosität (cp) | 1,513 | 1,510 | 1,530 | 1,527 |
| löslicher N (mg/100 g) | 765 | 765 | 712 | 686 |
| Kochfarbe (EBC) | 6,8 | 7,4 | 9,3 | 12,9 |

*) Mischung:

    67 % Schwelkmalz
    33 % Extrudat

Telefon (0 89) 22 06 74−78

Telex: 5 24 109 Lawp d
Telegrammanschrift: Lawpat München

Postscheck: München 1702 80-804
Bankkonto: Bayerische Vereinsbank
München, Konto 862019

- g -

Ihr Zeichen
Unser Zeichen
Tag

## P a t e n t a n s p r ü c h e

1. Malzprodukt, bestehend aus der Mischung eines Extrudates von in üblicher Weise geweichtem und gekeimtem Getreide, vorzugsweise Gerste, das nach der Keimung unzerkleinert bei Temperaturen bis 90°C unter ausreichender Luftzufuhr auf 12 bis 25 % Wassergehalt getrocknet und nach der Schrotung bei Temperaturen von 100 bis 220°C mit mechanischen Energieaufwendungen von 25 bis 200 $Wh \cdot kg^{-1}$ extrudiert wurde, und Malz, d a d u r c h   g e k e n n z e i c h n e t , daß die Mischung neben dem Extrudatanteil bis zu 95 % Schwelkmalz enthält.

2. Malzprodukt nach Anspruch 1, dadurch gekennzeichnet, daß das Schwelkmalz aus in üblicher Weise geweichter, gekeimter und getrockneter Gerste besteht.

3. Malzprodukt nach Anspruch 1 oder 2, dadurch gekennzeichnet, daß der Extrudatanteil aus Schwelkmalz besteht, das zur intensiven Lösung vor der Extrusion für 10 bis 60 Minuten bei Temperaturen von 50 bis 80°C gehalten worden ist.

4. Malzprodukt nach einem der Ansprüche 1 bis 3, dadurch gekennzeichnet, daß für die Bereitung normaler heller Biere der Extrudatanteil 10 bis 30 % beträgt und bei Temperaturen von 100 bis 175°C und mit mechanischen Enegieaufwendungen von 25 bis 75 $Wh \cdot kg^{-1}$ extrudiert worden ist.

8 München 22, Widenmayerstrasse 23          Telex: 5 24 109 Lawp d                    Postscheck: München 1702 80-804
Telefon (089) 22 06 74–78                    Telegrammanschrift: Lawpat München        Bankkonto: Bayerische Vereinsbank
                                                                                       München Konto 862 019

- 10 -

5. Malzprodukt nach einem der Ansprüche 1 bis 4, dadurch gekennzeichnet, daß zur Herstellung normaler heller Biere der Extrudatanteil 5 bis 10 % beträgt und zur Intensivierung der Farb- und Aromastoffbildung bei Temperaturen von 120 bis 220°C mit mechanischer Energieaufwendung von 50 bis 200 $Wh \cdot kg^{-1}$ extrudiert worden ist.

6. Malzprodukt nach einem der Ansprüche 1 und 5, dadurch gekennzeichnet, daß zur Herstellung dunkler Biere der Extrudatanteil 20 bis 30 % beträgt.

7. Malzprodukt nach einem der Ansprüche 1 und 5, dadurch gekennzeichnet, daß zur Herstellung von Whisky-Malz der Extrudatanteil bis zu 50 % beträgt.

8. Malzprodukt nach einem der Ansprüche 1 bis 7, dadurch gekennzeichnet, daß die Mischung zusätzlich herkömmliches Malz enthält.

9. Malzprodukt nach Anspruch 8, dadurch gekennzeichnet, daß es zusätzlich unvermälztes Getreide enthält.

10. Verwendung des Extrudates nach einem der vorhergehenden Ansprüche als Zusatz zum Malz zur Verstärkung von malztypischen Farb- und Aroma-Stoffen in einem aus diesem hergestellten Bier.

11. Verwendung des Extrudates der Zusammensetzung und Zweckbestimmung nach Anspruch 10 als Zusatz zum Malz für alkoholfreie, -arme, Leicht- oder Diät-Biere.

12. Verwendung des Extrudates der Zusammensetzung und Zweckbe-

- 11 -

Ihr Zeichen
Unser Zeichen
Tag

stimmung nach Anspruch 10 als Zusatz zu unvermälztem
Getreide (Rohfrucht) und technischen Enzymen.

13. Verwendung des Extrudates nach einem der vorhergehenden Ansprüche als Zusatz zum Malz zur Verstärkung der malztypischen Farb- und Aromastoffe in einem aus diesem hergestellten Whisky.

8 München 22, Widenmayerstrasse 23    Telex: 5 24 109 Lawp d    Postscheck: München 1702 80-804
Telefon (0 89) 22 06 74–78    Telegrammanschrift: Lawpal München    Bankkonto: Bayerische Vereinsbank
München, Konto 862 019